# EUROPEAN PATENT APPLICATION

(11) **EP 4 310 133 A1**
(43) Date of publication of application: **24.01.2024**
(21) Application number: 23184302.0
(22) Date of filing: 07.07.2023
(51) Int. Cl.: C08J 5/18, G02B 1/04

(54) **ULTRAHIGH MOLECULAR WEIGHT POLYETHYLENE THIN FILMS FORMED BY GEL CASTING**

(30) Priority: 19.07.2022 US 202263390477 P; 05.12.2022 US 202218061843
(71) Applicant: Meta Platforms Technologies, LLC, Menlo Park, CA 94025 (US)
(72) Inventor: MEI, Hao, Menlo Park, 94025 (US); BOROMAND, Arman, Menlo Park, 94025 (US); YE, Sheng, Menlo Park, 94025 (US); LIAO, Christopher Yuan Ting, Menlo Park, 94025 (US); HUANG, Rongzhi, Menlo Park, 94025 (US); OUDERKIRK, Andrew, Menlo Park, 94025 (US)
(74) Representative: Murgitroyd & Company

(57) **Abstract**

A polymer thin film includes polyethylene having a molecular weight of at least approximately 250,000 g/mol, and has an elastic modulus of at least approximately 25 GPa, a tensile strength of at least approximately 0.8 GPa, and a thermal conductivity of at least approximately 5 W/mK. Formation of the polymer thin film may include forming a polymer solution from a crystallizable polyethylene and a liquid solvent, forming a gel from the polymer solution, forming a polymer thin film from the gel by calendering or solid state extrusion, and stretching the polymer thin film.

## Description

### TECHNICAL FIELD

The instant disclosure is directed generally to polymer thin films having engineered optical, thermal, and mechanical properties, and more specifically to gel casting and stretching methods for forming optical quality polymer thin films having a high elastic modulus and tensile strength, and high thermal conductivity.

### BACKGROUND

Polymer materials may be incorporated into a variety of different optic and electro-optic systems, including passive and active optics and electroactive devices. Lightweight and conformable, one or more polymer layers may be incorporated into wearable devices such as smart glasses and are attractive candidates for emerging technologies including virtual reality/augmented reality devices where a comfortable, adjustable form factor is desired.

Virtual reality (VR) and augmented reality (AR) eyewear devices or headsets, for instance, may enable users to experience events, such as interactions with people in a computer-generated simulation of a three-dimensional world or viewing data superimposed on a real-world view. By way of example, superimposing information onto a field of view may be achieved through an optical head-mounted display (OHMD) or by using embedded wireless glasses with a transparent heads-up display (HUD) or augmented reality (AR) overlay. VR/AR eyewear devices and headsets may be used for a variety of purposes. Governments may use such devices for military training, medical professionals may use such devices to simulate surgery, and engineers may use such devices as design visualization aids.

These and other applications may leverage one or more characteristics of polymer materials, including the refractive index to manipulate light, thermal conductivity to manage heat, and mechanical strength and toughness to provide light-weight structural support. In various applications, optical elements and other components may include polymer thin films that have anisotropic mechanical and/or optical properties. The degree of optical or mechanical anisotropy achievable through conventional thin film manufacturing processes is typically limited, however, and is often exchanged for competing thin film properties such as flatness, toughness and/or film strength. For example, highly anisotropic polymer thin films often exhibit low strength in one or more in-plane direction, which may challenge manufacturability and limit performance.

Polymer thin films exhibiting optical anisotropy, for instance, may be incorporated into a variety of systems and devices, including birefringent gratings, reflective polarizers, optical compensators and optical retarders for systems using polarized light such as liquid crystal displays (LCDs). Birefringent gratings may be used as optical combiners in augmented reality displays, for example, and as input and output couplers for waveguides and fiber optic systems. Reflective polarizers may be used in many display-related applications, particularly in pancake optical systems and for brightness enhancement within display systems that use polarized light. For orthogonally polarized light, pancake lenses may use reflective polarizers with extremely high contrast ratios for transmitted light, reflected light, or both transmitted and reflected light.

Notwithstanding recent developments, it would be advantageous to provide optical quality, thermally conductive, and mechanically robust polymer thin films that may be incorporated into various optical systems including display systems for artificial reality applications.

### SUMMARY

According to a first aspect, there is provided a polymer thin film comprising: polyethylene having a molecular weight of at least approximately 250,000 g/mol; an elastic modulus of at least approximately 25 GPa; a tensile strength of at least approximately 0.8 GPa; and a thermal conductivity of at least approximately 5 W/mK.

A molecular weight distribution of the polyethylene may be selected from the group consisting of monodisperse, bimodal, and polydisperse. The polymer thin film may further comprise an additive having a molecular weight of less than approximately 4000 g/mol.

The additive may comprise polyethylene or a polyethylene oligomer. The additive may comprise a lubricant or an antioxidant. The additive may have a thermal conductivity of at least approximately 5 W/mK. The additive may constitute from approximately 50 wt.% to approximately 99 wt.% of the polymer thin film. The polymer thin film may have a near field transmissivity of at least approximately 85%. The polymer thin film may have a far field transmissivity of at least approximately 85%. The polymer thin may have an optical transmissivity within the visible spectrum of at least approximately 85%. The polymer thin film may have bulk haze of less than approximately 10%.

According to a second aspect, there is provided a method comprising: forming a polymer solution comprising a crystallizable polyethylene and a liquid solvent; forming a gel from the polymer solution; forming a polymer thin film from the gel by calendering or solid state extrusion; and stretching the polymer thin film, wherein the stretched polymer thin film comprises: polyethylene having a molecular weight of at least approximately 250,000 g/mol; an elastic modulus of at least approximately 25 GPa; a tensile strength of at least approximately 0.8 GPa; and a thermal conductivity of at least approximately 5 W/mK.

Forming the gel may comprise removing at least a portion of the liquid solvent from the polymer solution. Forming the gel may comprise cooling the polymer solution. Forming the gel may comprise adding a poor solvent to the polymer solution. Stretching the polymer thin film may comprise applying a uniaxial stress. Stretching the polymer thin film may comprise applying a biaxial stress. Stretching the polymer thin film may comprise applying a first tensile stress along a first in-plane direction of the polymer thin film and applying a second tensile stress along a second in-plane direction of the polymer thin film. The method may further comprise annealing the polymer thin film.

According to a third aspect, there is provided a polymer thin film, comprising: a crystalline polyethylene polymer having a bi-modal molecular weight distribution, wherein the polymer thin film comprises at least two of (i) an elastic modulus of at least approximately 25 GPa, (ii) a tensile strength of at least approximately 0.8 GPa, and (iii) a thermal conductivity of at least approximately 5 W/mK.

### BRIEF DESCRIPTION OF THE DRAWINGS

The accompanying drawings illustrate a number of exemplary arrangements and are a part of the specification. Together with the following description, these drawings demonstrate and explain various principles of the present disclosure.
FIG. 1 is a plot showing the bimodal distribution of molecular weights among components of an example polymer gel.
FIG. 2 is a plot showing the bimodal distribution of molecular weights among components of an example polymer gel.
FIG. 3 is a plot showing the bimodal distribution of molecular weights among components of an example polymer gel.
FIG. 4 is a flow chart of an example gel casting method for forming an ultrahigh molecular weight polyethylene polymer thin film.
FIG. 5 is a schematic illustration of an orthogonal consecutive stretching (OCS) apparatus and method for deforming and orienting a polymer thin film.
FIG. 6 is a schematic illustration of an extrusion system for forming a polymer thin film.
FIG. 7 is a schematic view of an example thin film orientation system for manufacturing an anisotropic polymer thin film.
FIG. 8 is a schematic view of a thin film orientation system for manufacturing an anisotropic polymer thin film.
FIG. 9 illustrates a roll-to-roll manufacturing configuration for conveying and orienting a polymer thin film.
FIG. 10 illustrates a calendering method for manufacturing a polymer thin film.
FIG. 11 is an illustration of exemplary augmented-reality glasses that may be used in connection with embodiments of this disclosure.
FIG. 12 is an illustration of an exemplary virtual-reality headset that may be used in connection with embodiments of this disclosure.

Throughoutthe drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

The optical, thermal, and mechanical response of a polymer thin film may be determined by its chemical composition, the chemical structure of the polymer repeat unit, its density and extent of crystallinity, as well as the alignment of the crystals and/or polymer chains throughout the polymer matrix. Among these factors, the crystal or polymer chain alignment may dominate. In crystalline or semi-crystalline polymer thin films, an optical, thermal, or mechanical property or condition may be correlated to the degree or extent of crystal orientation, whereas the degree or extent of chain entanglement may create comparable optical, thermal, or mechanical properties in thin films that include an amorphous polymer.

An applied stress may be used to form a preferred alignment of crystals or polymer chains within a polymer thin film and induce a corresponding modification of the optical, thermal, and/or mechanical properties along different directions of the film. As disclosed further herein, during processing where a polymer thin film is stretched to induce a preferred alignment of crystals/polymer chains and an attendant modification of the refractive index/birefringence, thermal, and mechanical properties, Applicants have shown that a gel casting method and the choice of an associated liquid solvent can decrease the propensity for polymer chain entanglement within the cast thin film.

In accordance with particular embodiments, Applicants have developed a polymer thin film manufacturing method for forming an optionally optical quality polyethylene (PE) thin film having desired thermal conductivity, toughness, and strength. Applicants have demonstrated that high quality, high performance single layer and multilayer polymer thin films having improved drawability and enhanced optical, thermal, and mechanical properties may be formed by implementing gel casting and stretching processes throughout one or more stages of thin film manufacture, including the acts of forming, pre-orienting, and final stretching.

Polymer thin films may be formed using casting operations such as melt extrusion, compression molding, solvent casting, gel casting, and the like. Applicants have demonstrated that enhanced drawability may be achieved by tuning one or more of the polymer chemistry, the draw temperature, and the draw rate of a cast polymer thin film. In some examples, the draw temperature may be correlated to the thin film's primary (glass, or alpha) relaxation and/or its low temperature (beta) relaxation.

A polymer thin film may be formed by gel casting from a polymer solution. A polymer solution may include one or more crystallizable polymers, one or more additives, and one or more liquid solvents. Gel casting, which may provide control of one or more of the polymer composition and concentration, choice and concentration of liquid solvent, and casting temperature, for example, may facilitate decreased entanglement of polymer chains and allow the polymer film to achieve a higher stretch ratio during a later deformation step. In some cases, one or more low molecular weight additives may be added to the polymer solution. The molecular weight distribution of the one or more crystallizable polymers and the additive(s) may be respectively mono-disperse, bimodal, or polydisperse.

The crystallizable polymer component of such a polymer thin film may have a high or ultrahigh molecular weight. In particular examples, the polymer thin film may include polyethylene. Example polyethylene materials include high molecular weight polyethylene, high density polyethylene, ultrahigh molecular weight polyethylene (UHMWPE), as well as derivatives and mixtures thereof, and may have a molecular weight (e.g., weight-averaged molecular weight) of at least approximately 250,000 g/mol. High density polyethylene may be characterized by a density of at least approximately 0.93 g/cm³. Ultrahigh molecular weight polyethylene may have a molecular weight of at least approximately 300,000 g/mol, e.g., approximately 300,000 g/mol, approximately 400,000 g/mol, approximately 500,000 g/mol, approximately 600,000 g/mol, approximately 700,000 g/mol, approximately 800,000 g/mol, approximately 900,000 g/mol, approximately 1,000,000 g/mol, approximately 2,000,000 g/mol, or approximately 5,000,000 g/mol, including ranges between any of the foregoing values.

In some embodiments, a polymer thin film may include a low molecular weight additive. The additive may include a low molecular weight polyethylene or polyethylene oligomer and may constitute up to approximately 99 wt.% of the polymer matrix forming the polymer thin film. Example polyethylene polymer and oligomer-based additives may include a reactive group such as vinyl, acrylate, methacrylate, epoxy, isocyanate, hydroxyl, amine, and the like. Such additives may be cured *in situ,* i.e., within a polymer thin film by applying one or more of heat or light, or by reaction with a suitable catalyst. Additives may have good solubility in, and may be index matched with, high molecular weight polyethylene, high density polyethylene, or ultrahigh molecular weight polyethylene.

A low molecular weight additive may have a molecular weight of less than approximately 4,000 g/mol, e.g., less than approximately 4,000 g/mol, less than approximately 2,000 g/mol, less than approximately 1,000 g/mol, less than approximately 500 g/mol, less than approximately 200 g/mol, or less than approximately 100 g/mol, including ranges between any of the foregoing values.

The molecular weight of the low molecular weight additive may be less than the molecular weight of the crystallizable polymer. According to one example, the crystallizable polymer may have a molecular weight of at least approximately 250,000 g/mol and the additive may have a molecular weight of less than approximately 4,000 g/mol. According to a further example, the crystallizable polymer may have a molecular weight of at least approximately 400,000 g/mol and the additive may have a molecular weight of less than approximately 2,000 g/mol.

Example additives may include one or more of hydrocarbon waxes, e.g., polyethylene-wax molecules or amide waxes, mineral oils, fluoropolymers, metal soaps, fatty acids, fatty alcohols and esters, etc. Polyethylene-wax molecules, for instance, may have a molecular weight of at least approximately 400 g/mol, e.g., 400, 1000, 2000, or 3000 g/mol, including ranges between any of the foregoing values. The wax content in an UHMWPE thin film may be at least approximately 0.1 wt.%, e.g., 0.1, 0.2, 0.4, 1, 2, 4, 10, 20, 30, 40, 50, 60, 70, 80, or 90 wt.%, including ranges between any of the foregoing values. Suitable mineral oils may have a molecular weight of at least approximately 200 g/mol, e.g., 200, 400, or 600 g/mol, including ranges between any of the foregoing values. In some embodiments, up to approximately 1000 ppm (e.g., 200, 400, 600, 800, or 1000 ppm) of a fluoropolymer or other processing aid may be incorporated into the polymer matrix of an UHMWPE thin film. An additive may be characterized by a refractive index of approximately 1.5 to approximately 1.6, e.g., 1.55.

An example low molecular weight additive may be characterized by a melting temperature (Tₘ) of at least approximately 40°C, e.g., approximately 40°C, approximately 60°C, approximately 80°C, approximately 100°C, or approximately 120°C, including ranges between any of the foregoing values. Reference herein to a melting temperature may include reference to a temperature corresponding to the onset of melting.

In some embodiments, an additive incorporated into the polymer matrix may include a photothermal dye. Example photothermal dyes include 2-(2H-benzotriazol-2-yl)-4,6-di-tert-pentylphenol (BZT), azobenzene, coronatine dye, graphene, quaterrylene-based dyes, and metal nanoparticles such as gold nanoparticles, as well as mixtures thereof. A photothermal dye such as azobenzene or metal nanoparticles may be functionalized by ethylene oligomers having a molecular weight of at least approximately 500 g/mol, e.g., 500, 1000, 2000, or 3000 g/mol, including ranges between any of the foregoing values. In some examples, a concentration of a photothermal additive within the polymer matrix may be at least approximately 0.5 wt.%, e.g., 0.5, 1, 2, or 5 wt.%, including ranges between any of the foregoing values. A functionalized photothermal dye may be added to polyethylene prior to or during formation of a thin film, which may be stretched to form a dichroic arrangement of dye in the polyethylene matrix.

In some embodiments, an additive may include an antioxidant. Example antioxidants include hindered phenols, phosphites, thiosynergists, hydroxylamines, and oligomer hindered amine light stabilizers (HALS). An UHMWPE thin film may include up to approximately 1 wt.% of an antioxidant additive. By way of example, phenolic benzotriazoles can form π-π interactions with polymer chains in the polyethylene polymer and enable phonons to pass at extremely low loading amounts without affecting optical quality.

In some embodiments, particulate or powdered polyethylene may be mixed with a particulate or powdered wax in a long continuous mixer (LCM) at any suitable temperature. For instance, a mixing temperature may be less than, equal to, or greater than a melting temperature of the wax. The mixing may be adapted to impregnate the polyethylene with the wax to form a homogeneous mixture prior to casting.

Polyethylene may be provided in particulate or powder form. Example polyethylene powders may have a particle size distribution (d90) greater than approximately 50 micrometers, e.g., greater than 50, 100, 200, or 300 micrometers, including ranges between any of the foregoing values.

A low molecular weight additive may be provided in particulate or powder form. Example additives, e.g., waxes, may have a particle size distribution (d90) less than approximately 30 micrometers, e.g., 5, 10, 15, 20, or 25 micrometers, including ranges between any of the foregoing values.

Further example additives may be thermally conductive. A thermally conductive additive may have a thermal conductivity of at least approximately 5 W/mK, e.g., 5, 10, 15, 20, 25, 30, 35, 40, 45, 50, 55, 60, 65, 70, 75, 80, 85, 90, 95, or 100 W/mK, including ranges between any of the foregoing values. Example thermally conductive additives include graphene, borophene, carbon nanotubes, silver nanowires, and metal nanoparticles, such as high aspect ratio metallic nanoparticles. According to some embodiments, the loading of a thermally conductive additive may range from approximately 0.01 wt.% to approximately 1 wt.%.

In some embodiments, two or more additives may be used. According to particular examples, an original additive may be used during processing of a thin film (e.g., during gel casting and/or stretching). Thereafter, the original additive may be removed and replaced by a secondary additive. Micro and macro voids produced during solvent removal or stretching processes may be filled by the secondary additive, for example. A secondary additive may be index-matched to the crystalline polymer and may, for example, have a refractive index ranging from approximately 1.38 to approximately 1.55. A secondary additive may be added by soaking the thin film in a melting condition or in a solvent bath or by calendering the thin film with the secondary additive. A secondary additive may have a melting point of less than approximately 160°C, e.g., less than 160°C, less than 140°C, or less than 120°C.

A secondary additive, if used, may be a poor solvent to polyethylene. Example poor solvents may include stearic acid or saturated hydrocarbons such as mineral oils (e.g., Kaydol^{®} mineral oil, paraffin oil, Primol^{™} oil, and the like). The secondary additive may be removed before, during, or after a film stretching process such as by evaporation or solvent exchange.

Generally, a low molecular weight additive may constitute up to approximately 99 wt.% of a polymer thin film, e.g., approximately 0.001 wt.%, approximately 0.002 wt.%, approximately 0.005 wt.%, approximately 0.01 wt.%, approximately 0.02 wt.%, approximately 0.05 wt.%, approximately 0.1 wt.%, approximately 0.2 wt.%, approximately 0.5 wt.%, approximately 1 wt.%, approximately 2 wt.%, approximately 5 wt.%, approximately 10 wt.%, approximately 20 wt.%, approximately 30 wt.%, approximately 40 wt.%, approximately 50 wt.%, approximately 60 wt.%, approximately 70 wt.%, approximately 80 wt.%, approximately 90 wt.%, approximately 95%, approximately 98%, or approximately 99%, including ranges between any of the foregoing values.

In some embodiments, optical and mechanical properties may be specifically targeted, and the polymer thin film may contain approximately 60 wt.% to approximately 90 wt.% of a low molecular weight polyethylene or polyethylene oligomer. In some embodiments, thermal conductivity may be specifically targeted, and the polymer thin film may contain approximately 1 wt.% to approximately 10 wt.% of a low molecular weight polyethylene or polyethylene oligomer.

The choice of liquid solvent may affect the maximum crystallinity of a PE-based polymer thin film. In addition, the solvent properties may impact the critical polymer concentration (c*) for polymer chains to entangle in solution. The liquid solvent (i.e., "solvent") may include a single solvent composition or a mixture of different solvents. In some embodiments, the solubility of the crystallizable polymer in the liquid solvent may be at least approximately 0.01 g/100 g (e.g., 0.1g/100g, 1 g/100 g or 10 g/100 g) at a temperature of 150°C or lower (e.g., 150°C, 100°C, 75°C, 50°C or 25°C).

Example liquid solvents include, but are not limited to, dimethylformamide (DMF), cyclohexanone, dimethylacetamide (DMAc), dimethyl sulfoxide (DMSO), trimethyl phosphate, N-methyl-2-pyrrolidone (NMP), butyrolactone, isophorone, triethyl phosphate, carbitol acetate, propylene carbonate, glyceryl triacetate, dimethyl phthalate, acetone, tetrahydrofuran (THF), xylene, benzene, 1,2,4-trichlorobenzene, chlorobenzene, toluene, trichlorobenzene, trichloroethylene, tetralin, cyclohexane, naphthalene, decalin, lauric acid, peanut oil, olive oil, steric acid, hexadecane and decalin-dodecanol.

A polymer gel may be obtained from the polymer solution by evaporating the solvent, cooling the polymer solution, adding a relatively poor solvent to the polymer solution, or a combination thereof. The solubility of the crystalline polymer in a poor solvent may be less than 20 g/100 g, e.g., 5 g/100 g or 1 g/100 g at a temperature of less than approximately 150°C, e.g., 75°C, 25°C, 0°C, -40°C, or -70°C. The polymer gel, which includes a mixture of the crystallizable polymer and the liquid solvent, may be transparent, translucent, or opaque. Following gelation, a polymer gel may be washed with a secondary solvent, which may replace the original solvent. A solvent evaporation step may be used to partially or completely remove the original solvent and/or the secondary solvent.

An example method of manufacturing an UHMWPE thin film includes forming a polymer solution including a crystallizable polyethylene and a liquid solvent, forming a gel from the polymer solution, forming a polymer thin film from the gel by calendering or solid state extrusion, and stretching the polymer thin film.

According to some embodiments, a polymer thin film may be formed via gel casting from a dilute solution including a crystallizable polymer and a solvent followed by removal of the solvent. Example solvents include poor solvents such as mineral oils, paraffin oil, stearic acid, p-xylene, dodecanol, and the like. The solvent may be removed prior to, during, and/or after the act(s) of stretching. The solvent may be removed directly by evaporation, or through contact with a miscible second solvent followed by evaporation of the resulting co-solvent.

A polymer thin film may be formed by applying a stress to the polymer gel, i.e., a polymer thin film containing the polymer gel. According to some examples, a solid state extrusion process may be used to orient the polymer chains and form a polymer thin film. According to further examples, a calendering process may be used to orient polymer chains in the gel at room temperature or at an elevated temperature. Calendering is a process of compressing a thin film during production by passing a polymer thin film between one or more pairs of heated rollers. The solvent may be partially or fully removed before, during, or after stretching and orienting. Stretching and the associated chain/crystal alignment may be followed by annealing to stabilize the alignment of polymer chains within the polymer thin film.

In an example process, a dried or substantially dried polymer material may be hot pressed to form a desired shape that is fed through a solid state extrusion system (i.e., extruder) at a suitable extrusion temperature. A solid state extruder may include a bifurcated nozzle, for example. The temperature for hot pressing and the extrusion temperature may each be less than approximately 190°C. That is, the hot pressing temperature and the extrusion temperature may be independently selected from 180°C, 170°C, 160°C, 150°C, 140°C, 130°C, 120°C, 110°C, 100°C, 90°C, or 80°C, including ranges between any of the foregoing values. According to particular embodiments, the extruded polymer material may be stretched further, e.g., using a post-extrusion, uniaxial or biaxial stretch process.

In some examples, a mixture of "unentangled" polyethylene and low molecular weight additive may be extruded at a temperature less than approximately 140°C (e.g., 120°C or 130°C) and above the melting point of the additive to form a polymer thin film. An extruded thin film may have a thickness of less than approximately 2 mm (e.g., 500 micrometers, 750 micrometers, or 1 mm, including ranges between any of the foregoing values) and a porosity of less than approximately 10% (e.g., less than 5%, less than 2%, or less than 1%).

A calendering process may be applied to the dried or partially dried gel before stretching. The gel may be calendered several times with a progressively decreasing roller gap to achieve a target thickness. During the calendering process, any residual solvent may be removed. The calendering process can be performed at room temperature and/or at a temperature no higher than approximately 150°C, e.g., 130°C, 110°C, 90°C, 70°C, or 50°C. The polymer may be stretched to a stretch ratio of at least approximately 1.5, e.g., 2, 2.5, 3, 3.5, 4, 4.5, 5, 5.5, 6, 7, 8, 9, 10, 15, 20, 30, or 50, including ranges between any of the foregoing values.

A cast polymer thin film may be stretched using single or multiple stretching events. Some stretching processes may include two successive stretching events. For instance, orthogonal consecutive stretching (OCS) may be used to develop structural fingerprints, such as smaller lamellar thicknesses and higher degrees of polymer chain orientation at draw ratios less than the draw ratios used to achieve similar structural fingerprints via comparative single stretching (SS) or parallel consecutive stretching (PCS) techniques. Orthogonal consecutive stretching may include first stretching a polymer thin film along a first in-plane axis, and then subsequently stretching the polymer thin film along a second in-plane axis that is orthogonal to the first in-plane axis.

In an example method, a cast polymer thin film may be stretched along a first in-plane axis to a stretch ratio of up to approximately 4 (e.g., 2, 3, or 4, including ranges between any of the foregoing values) with an attendant relaxation in the cross-stretch direction having a relaxation ratio of at least approximately 0.2 (e.g., 0.2, 0.3, 0.4, or 0.5, including ranges between any of the foregoing values). Subsequently, the polymer thin film may be stretched along a second in-plane axis orthogonal to the first in-plane axis to a stretch ratio of at least approximately 7 (e.g., 7, 10, 20, 30, 40, 50, or 60, including ranges between any of the foregoing values) with a relaxation ratio in the cross-stretch direction of at least approximately 0.2 (e.g., 0.2, 0.3, 0.4, or 0.5, including ranges between any of the foregoing values).

In some examples, the draw ratio in the first stretching step may be less than the draw ratio in the second stretching step. According to further embodiments, the temperature of the polymer thin film during the second stretching step may be greater than the polymer thin film temperature during the first stretching step. The temperature during the second stretching step may be at least approximately 5°C greater than the temperature during the first stretching step (e.g., 5, 10, 15, or 20°C greater, including ranges between any of the foregoing values).

Stretching may include a single act of stretching or plural, successive stretching events, such as along different in-plane directions of a polymer thin film. The act of stretching may be velocity limited or strain rate limited. In some embodiments, a polymer thin film may be stretched at a variable or constant velocity. In some embodiments, the polymer thin film may be stretched using a variable strain rate or a constant strain rate (e.g., 0.5/sec, 1/sec, 5/sec, or 10/sec, including ranges between any of the foregoing values). By way of example, the strain rate may decrease throughout an act of stretching and/or amongst different stretching events from an initial strain rate (e.g., 5/sec) to a final strain rate (e.g., 0.5/sec).

In some embodiments, a polymer thin film may be heated and stretched along a first direction, cooled, and then heated and stretched along a second direction. In some embodiments, a polymer thin film may be heated and stretched along a first direction, cooled, and then heated and stretched again along the first direction. Following the second stretching step, the polymer thin film may be cooled. The acts of cooling may immediately follow the first (or second) stretching steps, where the polymer thin film may be cooled within approximately 10 seconds following completion of the first (or second) stretching step. In some examples, the temperature of the polymer thin film during an act of stretching may be greater than the glass transition temperature of the polymer. In some examples, the temperature of the polymer thin film during an act of stretching may be less than, equal to, or greater than the melting onset temperature of the polymer.

Cooling may stabilize the microstructure of the stretched polymer thin film. In some examples, the temperature of the polymer thin film during an act of stretching may be greater than the glass transition temperature of the crystallizable polymer. In some examples, the temperature of the polymer thin film during an act of stretching may be less than, equal to, or greater than the melting onset temperature of the crystallizable polymer.

In certain aspects, the tensile stress may be applied uniformly or non-uniformly along a lengthwise or widthwise dimension of the polymer thin film. Heating of the polymer thin film may accompany the application of the tensile stress. For instance, a semi-crystalline polymer thin film may be heated to a temperature greater than room temperature (~23°C) to facilitate deformation of the thin film and the formation and realignment of crystals and/or polymer chains therein.

The temperature of the polymer thin film may be maintained at a desired value or within a desired range before, during and/or after the act of stretching, i.e., within a pre-heating zone or a deformation zone downstream of the pre-heating zone, in order to improve the deformability of the polymer thin film relative to an un-heated polymer thin film. The temperature of the polymer thin film within a deformation zone may be less than, equal to, or greater than the temperature of the polymer thin film within a pre-heating zone.

In some embodiments, the polymer thin film may be heated to a constant temperature throughout the act of stretching. In some embodiments, a region of the polymer thin film may be heated to different temperatures, i.e., during and/or subsequent to the application of a tensile stress. In some embodiments, different regions of the polymer thin film may be heated to different temperatures. In certain embodiments, the strain realized in response to the applied tensile stress may be at least approximately 20%, e.g., approximately 20%, approximately 50%, approximately 100%, approximately 200%, approximately 400%, approximately 500%, approximately 1000%, approximately 2000%, approximately 3000%, or approximately 4000% or more, including ranges between any of the foregoing values.

The crystalline content within the polymer thin film may increase during the act of stretching. In some embodiments, stretching may alter the orientation of crystals within a polymer thin film without substantially changing the crystalline content.

A polyethylene thin film may be oriented either uniaxially or biaxially as a single layer or multilayer to form a mechanically anisotropic and optically clear film. An anisotropic polymer thin film may be formed using a thin film orientation system configured to heat and stretch a polymer thin film in at least one in-plane direction in one or more distinct regions thereof. In some embodiments, a thin film orientation system may be configured to stretch a polymer thin film, i.e., a crystallizable polymer thin film, along only one in-plane direction. For instance, a thin film orientation system may be configured to apply an in-plane stress to a polymer thin film along the x-direction while allowing the thin film to relax along an orthogonal in-plane direction (e.g., along the y-direction). As used herein, the relaxation of a polymer thin film may, in certain examples, accompany the absence of an applied stress along a relaxation direction.

According to some embodiments, within an example orientation system, a polymer thin film may be heated and stretched transversely to a direction of film travel through the system. In such embodiments, a polymer thin film may be held along opposing edges by plural movable clips slidably disposed along a diverging track system such that the polymer thin film is stretched in a transverse direction (TD) as it moves along a machine direction (MD) through heating and deformation zones of the thin film orientation system. In some embodiments, the stretching rate in the transverse direction and the relaxation rate in the machine direction may be independently and locally controlled. In certain embodiments, large scale production may be enabled, for example, using a roll-to-roll manufacturing platform.

In various examples, the extent of relaxation perpendicular to the stretch direction may be approximately equal to the square root of the stretch ratio in the stretch direction. In some embodiments, the extent of relaxation may be substantially constant throughout the stretching process(es). In further embodiments, the extent of relaxation may decrease, with greater relaxation associated with the beginning of a stretch step and lesser relaxation associated with the end of a stretch step.

Following the act(s) of stretching, one or more thin film properties may be refined through hot pressing or hot calendering. Uniaxial hot pressing, for example, may be performed in a rigid die with loading applied along a common axis. Some pressing systems may include a graphite die, which may be enclosed in a protective atmosphere or vacuum chamber. During hot pressing, temperature and pressure may be applied simultaneously to the stretched polymer thin film. Heating may be achieved using induction coils that surround the graphite die, and pressure may be applied hydraulically.

In some embodiments, a stretched polymer thin film may be pressed or calendered to at least approximately 50% of its initial thickness (e.g., 50%, 60%, 70%, or 80% of its initial thickness, including ranges between any of the foregoing values) under an applied pressure of at least approximately 20 MPa (e.g., 20, 30, 40, 50, 100, 150, 200, 300, 400, or 500 MPa, including ranges between any of the foregoing values) and at a temperature of less than approximately 140°C (e.g., 120°C, 125°C, 130°C, or 135°C, including ranges between any of the foregoing values).

A pressed or calendered polymer thin film may have a thickness of less than approximately 500 micrometers, e.g., less than 400 micrometers, less than 300 micrometers, or less than 200 micrometers. According to some embodiments, following hot pressing or hot calendering, a polymer thin film may be stretched further using one or more additional stretching steps. In a post-hot pressing or post-hot calendering stretching step, a polymer thin film may be stretched to a draw ratio of approximately 5 or greater (e.g., 5, 10, 20, 40, 60, 80, 100, 120, or 140, including ranges between any of the foregoing values).

Hot pressing or hot calendering may increase the transmissivity and/or thermal conductivity of a polymer thin film. According to some embodiments, the applied pressure may collapse voids within the polymer thin film, thus decreasing the overall void volume and increasing the density of the polymer matrix. Moreover, hot calendaring may decrease the bulk haze of a polymer thin film.

In particular embodiments, hot calendaring may follow stretching. For example, a stretched film may be hot calendered at a temperature no greater than approximately 150°C, e.g., 130°C, 110°C, 90°C, 70°C, 50°C, or 30°C. Additional index matching additives may be added during this process. The additives may include, but are not limited to, polyethylene-wax molecules or amide waxes, mineral oils, fluoropolymers, metal soaps, fatty acids, fatty alcohols and esters, etc. In some examples, the haze of a UHMWPE or HDPE film may be decreased from 20% to 3% after calendering. In further examples, hot calendaring may decrease bulk haze from 9% to less than 1%.

Following deformation of the polymer thin film, the heating may be maintained for a predetermined amount of time, followed by cooling of the polymer thin film. The act of cooling may include allowing the polymer thin film to cool naturally, at a set cooling rate, or by quenching, such as by purging with a low temperature gas, which may thermally stabilize the polymer thin film.

Following deformation, the crystals or chains may be at least partially aligned with the direction of the applied tensile stress. As such, a polymer thin film may exhibit a high degree of optical clarity and mechanical anisotropy, including one or any combination of: transmissivity within the visible spectrum (380-750 nm) of at least approximately 80% (e.g., 80, 90, 95, 97, or 99%, including ranges between any of the foregoing values), bulk haze of less than approximately 10% (e.g., 0, 1, 2, 3, 4, 5, 6, 7, 8, 9, or 10%, including ranges between any of the foregoing values), a Young's modulus of at least approximately 30 GPa (e.g., 30, 40, 50, 60, 70, 80, 90, or 100 GPa, including ranges between any of the foregoing values), tensile strength of at least approximately 0.8 GPa (e.g., 0.8, 1, or 1.5 GPa, including ranges between any of the foregoing values), thermal conductivity of at least approximately 5 W/mK (e.g., 5, 10, 20, 30, 40, 50, 60, 70, or 80 W/mK, including ranges between any of the foregoing values), void volume of less than approximately 25% (e.g., 0, 1, 2, 3, 4,5,10,15, 20, or 25%, including ranges between any of the foregoing values) and an average void size of less than approximately 100 nm (e.g., 10, 20, 50, or 100 nm, including ranges between any of the foregoing values). In some embodiments, the modulus of a polymer thin film may be invariant or substantially invariant as a function of frequency (e.g., over a range of 0.1 to 100 Hz, for example). These and other properties may exhibit an in-plane anisotropy ranging from approximately 2:1 to approximately 100:1 or more, e.g., 2:1, 3:1, 4:1, 5:1, 10:1, 20:1, 50:1, or 100:1.

The presently disclosed polymer thin films may be characterized as optical quality polymer thin films and may form, or be incorporated into, an optical element such as an actuatable layer. Optical elements may be used in various display devices, such as virtual reality (VR) and augmented reality (AR) glasses and headsets. The efficiency of these and other optical elements may depend on the degree of optical clarity, thermal conductivity and/or mechanical response.

According to various embodiments, an "optical quality" thin film may, in some examples, be characterized by a transmissivity within the visible light spectrum of at least approximately 20%, e.g., 20, 30, 40, 50, 60, 70, 80, 90 or 95%, including ranges between any of the foregoing values, and less than approximately 10% bulk haze, e.g., 0, 1, 2, 4, 6, or 8% bulk haze, including ranges between any of the foregoing values. Transparent materials will typically exhibit very low optical absorption and minimal optical scattering.

A material or element that is "transparent" or "optically transparent" may, for a given thickness, have a transmissivity within the visible light spectrum of at least approximately 80%, e.g., approximately 80, 90, 95, 97, 98, 99, or 99.5%, including ranges between any of the foregoing values, and less than approximately 5% bulk haze, e.g., approximately 0.1, 0.2, 0.5, 1, 2, or 5% bulk haze, including ranges between any of the foregoing values. Transparent materials will typically exhibit very low optical absorption and minimal optical scattering.

As used herein, the terms "haze" and "clarity" may refer to an optical phenomenon associated with the transmission of light through a material, and may be attributed, for example, to the refraction of light within the material, e.g., due to secondary phases or porosity and/or the reflection of light from one or more surfaces of the material. As will be appreciated by those skilled in the art, haze may be associated with an amount of light that is subject to wide angle scattering (i.e., at an angle greater than 2.5° from normal) and a corresponding loss of transmissive contrast, whereas clarity may relate to an amount of light that is subject to narrow angle scattering (i.e., at an angle less than 2.5° from normal) and an attendant loss of optical sharpness or "see through quality."

An example polymer may include ultrahigh molecular weight polyethylene (UHMWPE). According to some embodiments, the optical properties of UHMWPE may be improved in conjunction with the processing methods disclosed herein by decreasing or eliminating surface and/or bulk defects. In some embodiments, one or more low melting point additives may be incorporated into the polymer matrix of a polymer thin film.

In some embodiments, a protective layer may be formed over one or both major surfaces of a polymer thin film. The protective layer(s) may include an organic or an inorganic material, and may shield the polymer thin film against surface damage or debris, such as scratches or dust. The protective layer(s), if provided, may be removed prior to one or more acts of stretching, or the protective layer(s) may be removed following stretching. In various examples, the removable protective layer(s) may have a 90° peel strength of at least approximately 10 g/cm width (e.g., 10, 20, 50, 100, 200, 500, 1000 g/cm width or greater).

In further embodiments, an ultrahigh molecular weight polyethylene polymer thin film may be incorporated into a multilayer structure, such as the "A" layer in an ABAB multilayer. Further multilayer architectures may include AB, ABA, or ABC configurations. Each B layer (and each C layer, if provided) may include a further polymer composition. According to some embodiments, the B (and C) layer(s) may be electrically conductive and may include, for example, indium tin oxide (ITO) or poly(3,4-ethylenedioxythiophene).

In a single layer or multilayer architecture, each polyethylene layer may have a thickness ranging from approximately 100 nm to approximately 5 mm, e.g., 100, 200, 500, 1000, 2000, 5000, 10000, 20000, 50000, 100000, 200000, 500000, 1000000, 2000000, or 5000000 nm, including ranges between any of the foregoing values. A multilayer stack may include two or more such layers. In some embodiments, a density of a polyethylene layer or thin film may range from approximately 1.7 g/cm³ to approximately 1.9 g/cm³, e.g., 1.7, 1.75, 1.8, 1.85, or 1.9 g/cm³, including ranges between any of the foregoing values.

According to some embodiments, the areal dimensions (i.e., length and width) of a PE polymer thin film may independently range from approximately 5 cm to approximately 50 cm or more, e.g., 5, 10, 20, 30, 40, or 50 cm, including ranges between any of the foregoing values. Example anisotropic polymer thin films may have areal dimensions of approximately 5 cm x 5 cm, 10 cm x 10 cm, 20 cm x 20 cm, 50 cm x 50 cm, 5 cm x 10 cm, 10 cm x 20 cm, 10 cm x 50 cm, etc.

As used herein, the terms "polymer thin film" and "polymer layer" may be used interchangeably. Furthermore, reference to a "polymer thin film" or a "polymer layer" may include reference to a "multilayer polymer thin film" unless the context clearly indicates otherwise.

In accordance with various embodiments, a polymer composition used to form an anisotropic polymer thin film may include a crystallizable polymer and a low molecular weight additive. Without wishing to be bound by theory, one or more low molecular weight additives may interact with high molecular weight polymers throughout casting and stretch processes to facilitate less chain entanglement and better chain alignment and, in some examples, create a higher crystalline content within the polymer thin film.

In some examples, a composition having a bimodal molecular weight distribution may be cast to form a thin film, which may be stretched to induce mechanical and thermal anisotropy through crystal and/or chain realignment. Stretching may include the application of a uniaxial stress or a biaxial stress. In some embodiments, the application of an in-plane biaxial stress may be performed simultaneously or sequentially. In some embodiments, the low molecular weight additive may beneficially decrease the stretching temperature needed to achieve crystal and/or chain realignment. In some embodiments, a polymer thin film may be stretched by calendering, solid state extrusion, and/or a combination of thereof.

In accordance with various embodiments, an anisotropic polymer thin film may be formed by applying a desired stress state to a crystallizable polymer thin film. A polymer composition capable of crystallizing may be formed into a single layer using appropriate gel casting operations. For example, an ultrahigh molecular weight polyethylene-containing composition may be cast and oriented as a single layer to form a mechanically and optically anisotropic thin film. According to further embodiments, a crystallizable polymer may be cast to form a thin film and plural such thin films may be laminated to form a multilayer structure.

In some embodiments, a polymer thin film having a bimodal molecular weight distribution may be stretched to a larger stretch ratio than a comparative polymer thin film (i.e., lacking a low molecular weight additive). In some examples, a stretch ratio may be greater than 4, e.g., 5, 10, 20, 40, or more. The act of stretching may include a single stretching step or plural (i.e., successive) stretching steps where one or more of a stretching temperature and a strain rate may be independently controlled.

In example methods, the polymer thin film may be heated during stretching to a temperature of from approximately 60°C to approximately 150°C and stretched at a strain rate of from approximately 0.1%/sec to approximately 300%/sec. Moreover, one or both of the temperature and the strain rate may be held constant or varied during an act of stretching. For instance, a polymer thin film may be stretched at a first temperature and a first strain rate (e.g., 110°C and 50%/sec) to achieve a first stretch ratio. Subsequently, the temperature of the polymer thin film may be increased, and the strain rate may be decreased to a second temperature and a second strain rate (e.g., 150°C and 5%/sec) to achieve a second stretch ratio.

Stretching may include the application of a uniaxial or biaxial stress. Stretching may include a single act of stretching or plural, successive stretching events, such as along different in-plane directions of a polymer thin film. The act of stretching may be velocity limited or strain rate limited. In some embodiments, a polymer thin film may be stretched at a variable or constant velocity. In some embodiments, the polymer may be stretched using a variable strain rate or a constant strain rate (e.g., 0.5 s⁻¹, 1 s⁻¹, 5 s⁻¹, or 10 s⁻¹, including ranges between any of the foregoing values). By way of example, the strain rate may decrease throughout an act of stretching and/or amongst different stretching events from an initial strain rate (e.g., 5 s⁻¹) to a final strain rate (e.g., 0.5 s⁻¹).

Features from any of the embodiments described herein may be used in combination with one another in accordance with the general principles described herein. These and other embodiments, features, and advantages will be more fully understood upon reading the following detailed description in conjunction with the accompanying drawings and claims.

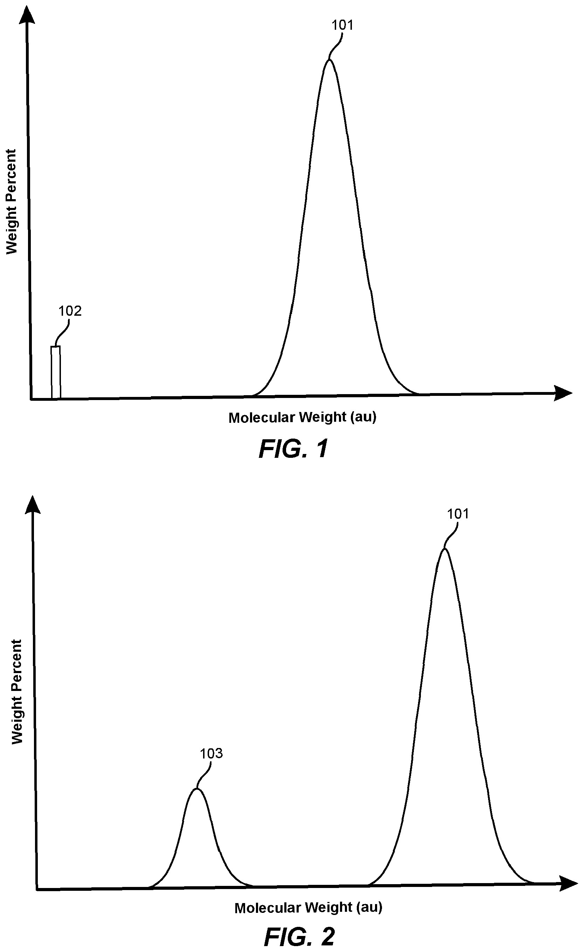

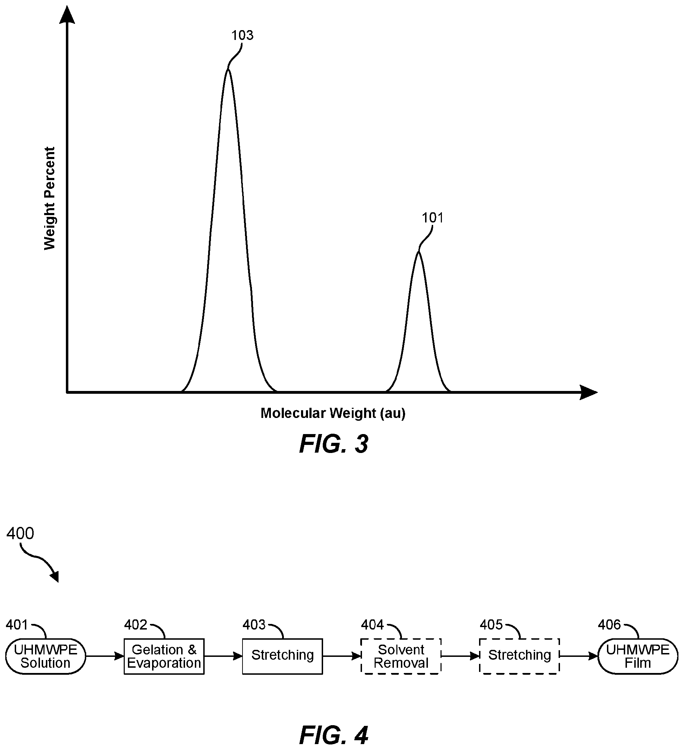

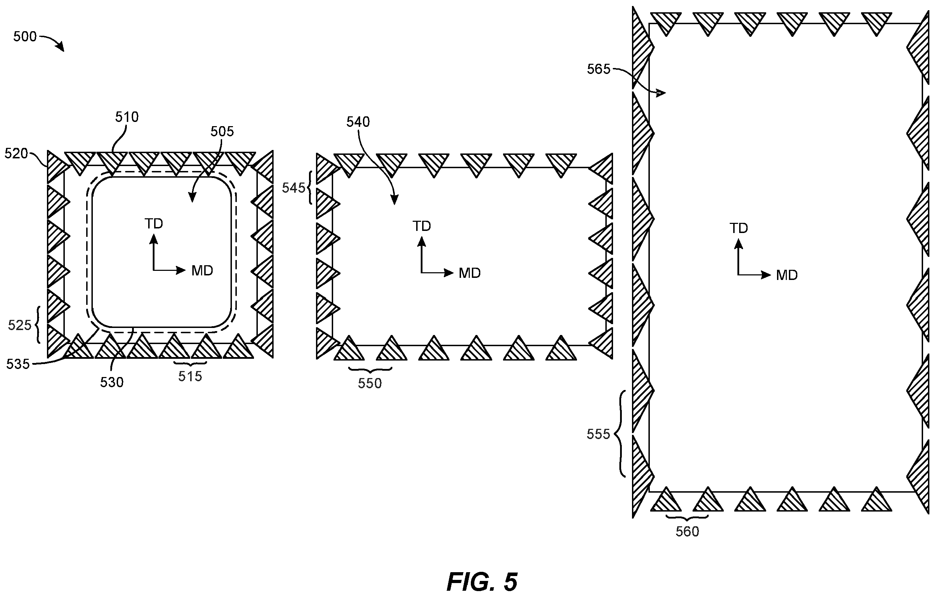

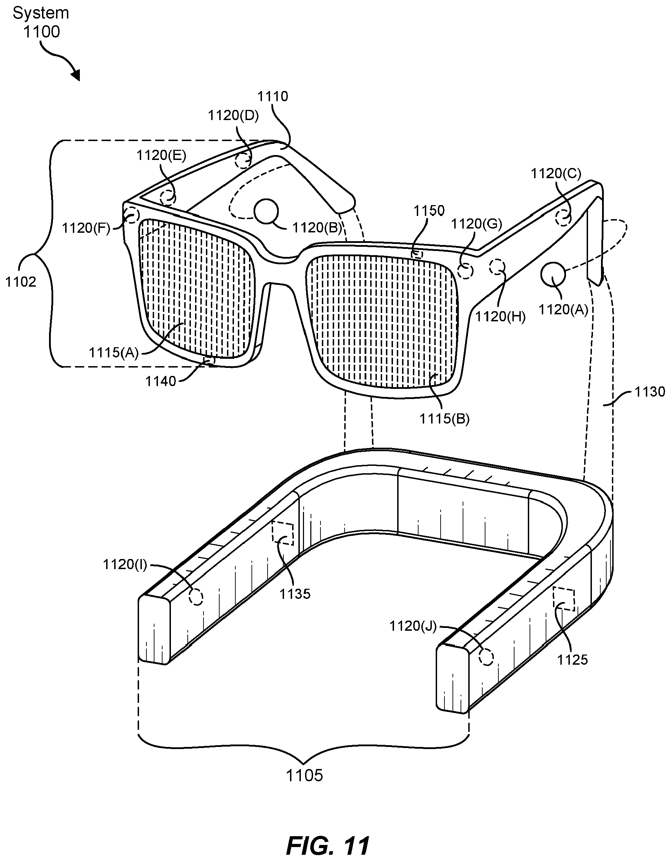

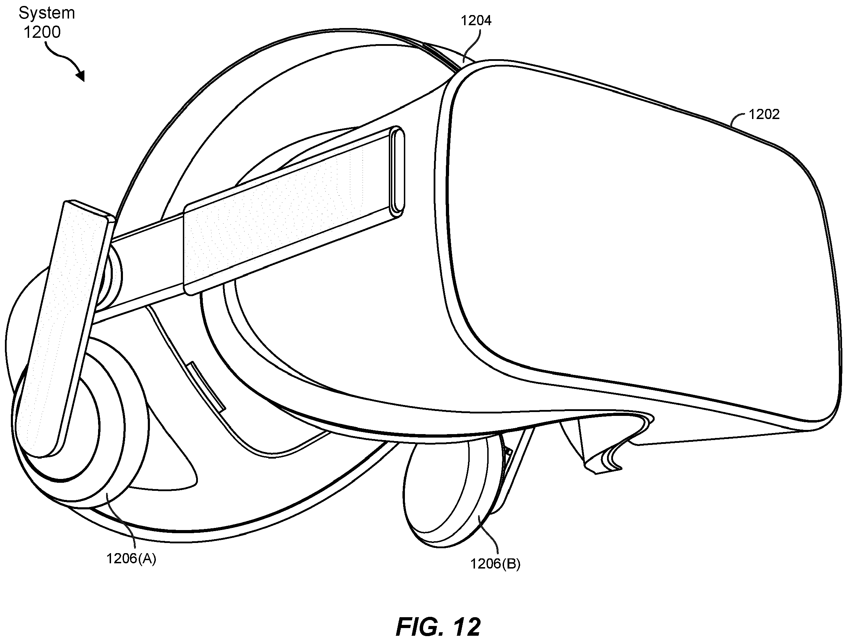

The following will provide, with reference to FIGS. 1-12, a detailed description of compositions and methods for forming anisotropic polymer thin films. The discussion associated with FIGS. 1-3 includes a description of polymer compositions having a bimodal molecular weight distribution. The discussion associated with FIG. 4 relates to an example gel casting method for forming a polymer thin film. The discussion associated with FIGS. 5-10 relates to example polymer thin film stretching paradigms and associated stretching apparatus. The discussion associated with FIGS. 11 and 12 relates to exemplary virtual reality and augmented reality devices that may include one or more anisotropic polymer materials as disclosed herein.

Referring to FIG. 1, shown schematically is a composition having a bimodal molecular weight distribution that includes a crystallizable polymer 101 and a low molecular weight additive 102. Referring to FIG. 2, shown schematically is a further composition having a bimodal molecular weight distribution that includes a crystallizable polymer 101 and a low molecular weight additive 103, where the content of the crystallizable polymer is greater than the content of the low molecular weight additive. Referring to FIG. 3, shown schematically is a still further composition having a bimodal molecular weight distribution that includes a crystallizable polymer 101 and a low molecular weight additive 103, where the content of the crystallizable polymer is less than the content of the low molecular weight additive.

Referring to FIG. 4, shown is a flow chart depicting a gel casting method for forming an UHMWPE polymer thin film. An example method 400 may include forming a PE solution 401 by combining a crystallizable polymer and a solvent, forming a gel 402 from the PE solution by removing at least some of the solvent, decreasing the solution temperature, and/or adding a poor solvent, stretching the gel to form an oriented polymer thin film 403, optionally removing any remaining solvent 404 from the polymer thin film, and optionally further stretching 405 the polymer thin film to form a PE polymer thin film 406 having a high elastic modulus, high tensile strength, and high thermal conductivity. Solvent removal may include cooling the gel, adding to the gel a relatively poor solvent, or a combination thereof. Solvent removal may include a solvent washing step where the solvent is partially or wholly replaced with a secondary solvent that is then partially or completely removed. The acts of stretching and solvent removal may be performed in succession and/or in any concurrent processing paradigm.

Referring to FIG. 5, shown schematically is an orthogonal consecutive stretching (OSC) system 500 and a corresponding method where a polymer thin film 505 may be first stretched in the machine direction (MD) and then stretched in the transverse direction (TD). In the illustrated embodiment, polymer thin film 505 may be initially secured between opposing clip arrays 510, 520. The inter-clip spacing 515 within clip array 510 and the inter-clip spacing 525 within clip array 520 may be independently controlled. Thus, throughout a stretching process, an inter-clip spacing along different axes of orthogonal consecutive stretching (OSC) system 500 may decrease, increase, or be held constant. According to various embodiments, stretching of the polymer thin film 505 in the machine direction and stretching of the polymer thin film 505 in the transverse direction may occur simultaneously and/or successively.

By way of example, and referring still to FIG. 5, cast polymer thin film 505 may be stretched in a first stretching step along a first axis, cooled and optionally cut to a desired width, and then stretched in a second stretching step. A temperature of the polymer thin film during the second stretching step may be at least approximately 5°C greater than a temperature of the polymer thin film during the first stretching step (e.g., approximately 5°C, approximately 10°C, approximately 15°C, or approximately 20°C greater, including ranges between any of the foregoing values).

During a second stretching step, the polymer thin film may be stretched along the first axis or, as illustrated in FIG. 5, along a second axis perpendicular to the first axis. The draw ratio during the second stretching step may be at least approximately 7, e.g., approximately 7, approximately 10, approximately 20, approximately 30, approximately 40, or more, including ranges between any of the foregoing values. In some embodiments, the draw ratio during the first stretching step may be less than the draw ratio during the second stretching step. By way of example, a draw ratio during the first stretching step may be less than approximately 4, e.g., approximately 3, or approximately 2, including ranges between any of the foregoing values. Following the second stretching step, the polymer thin film may be heated to increase its crystalline content.

Prior to the acts of stretching, a polymer thin film may be pre-aligned, i.e., with respect to the stretch axes of a thin film orientation system. Pre-alignment of the polymer thin film may allow polymer chains within the polymer thin film to form a cross-linked crystal network. This cross-linked crystal network may allow the polymer film to be stretched to higher draw ratios compared to thin films that are stretched only in a single direction and without pre-alignment.

Referring still to FIG. 5, heaters 530, 535 may be respectively located above and below the plane of polymer thin film 505, and may be configured to control a temperature of the polymer thin film during the acts of stretching. Heaters 530, 535 may include hot air blowers, for example. A temperature of a polymer thin film may be constant or substantially constant during one or more acts of stretching. Alternatively, a temperature of a polymer thin film may increase or decrease throughout stretching processes. Example temperatures may be greater than the polymer's glass transition temperature (Tg) but less than an onset temperature for melting (Tm).

During a first stretching process, an inter-clip spacing 550 within clip array 510 may increase, while an inter-clip spacing 545 within clip array 520 may be fixed. A tensile stress may be applied to the polymer thin film 505 along the machine direction while the polymer thin film is unstressed along the transverse direction, thus forming a uniaxially stretched polymer thin film 540. During a second and subsequent stretching process, an inter-clip spacing 555 within clip array 520 may increase, while an inter-clip spacing 560 within clip array 510 may be fixed. Thus, a tensile stress may be applied to the polymer thin film 540 along the transverse direction while the polymer thin film is unstressed along the machine direction, thus forming an OCS processed polymer thin film 565.

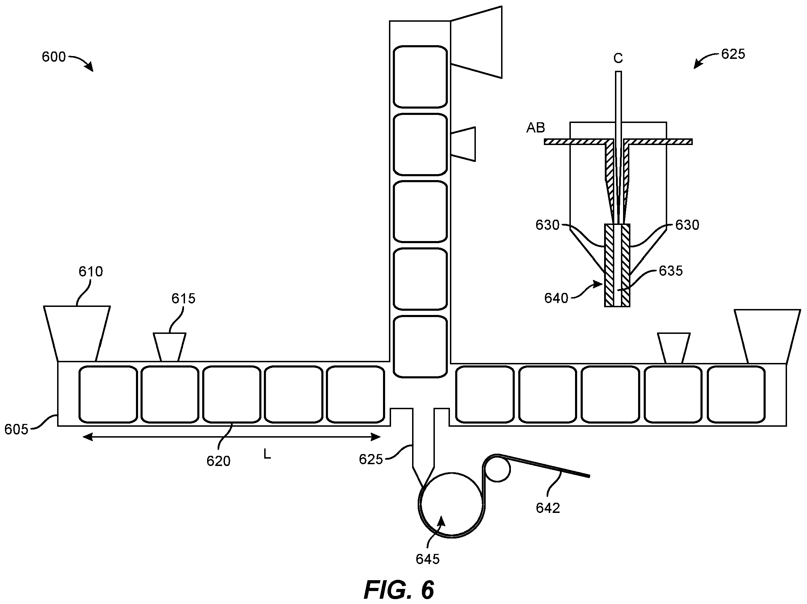

Referring now to FIG. 6, shown schematically is an example extrusion system for forming a cast polymer thin film. Extrusion system 600 may be configured to form a single layer polymer thin film or, as shown in the illustrated embodiment, a multilayer polymer thin film from plural sources. Different sources of feedstock may differ compositionally, for example. Multilayer polymer thin films may include 2 or more layers, where individual layers may be formed simultaneously in situ or aggregated to form a multilayer having, for example, 4, 8, 16, 32, 64, 128, 256, 512, or a greater number of individual layers.

During operation, a resin typically provided in powder or pellet form may be fed into extruder 605 from a hopper 610. One or more optional additives may be blended with the resin within hopper 610 or incorporated using a separate downstream hopper 615. The temperature of extruder 605 along its length (L) may be controlled by heating elements 620. Extruder 605 may include a screw or other element (not shown) for mixing, homogenizing, and driving feedstock from hoppers 610, 615 to an extrusion die 625.

As shown in the inset, extrusion die 625 may include plural inputs A, B, C, that are configured to receive feedstock from plural respective extruders (e.g., extruder 605, etc.). In some embodiments, the temperature of the die 625 may be greater than the melting point of the feedstock. The melted feedstock may be output through die 625 to form a multilayer thin film 640 that may include, for example, a central polymer layer 635 and a pair of outer layers 630 that sandwich the central layer 635. Multilayer thin film 640 may be initially collected on a chilled roller 645 and output as a pre-oriented cast thin film 642. The temperature of the chilled roller 645 may be selected based on the type of additive(s) used in the process. The rotational rate of the chilled roller 645 (i.e., relative to the output rate of the extrusion die 625) may be adjusted to pre-orient multilayer thin film 640.

In some embodiments, the central layer 635 may include ultrahigh molecular weight polyethylene. Each outer layer 630 may include a material having a high surface energy relative to polyethylene or a material having a low surface energy relative to polyethylene.

Prior to an act of stretching, one or both of the outer layers 630 may be removed from the multilayer thin film 640. By way of example, the outer layer(s) 630 may be removed prior to stretching the central layer 635, removed after one stage of the stretching (e.g., removed after stretching along the machine direction), or removed following two stages of stretching (e.g., removed following an OCS process). In some embodiments, the outer layers 630 may be removed from the central layer 635 by peeling. In some embodiments, the outer layers 630 may have a 90° peel strength of at least approximately 10 g/cm width, e.g., 10, 20,50,100, 500, or 1000 g/cm width, including ranges between any of the foregoing values.

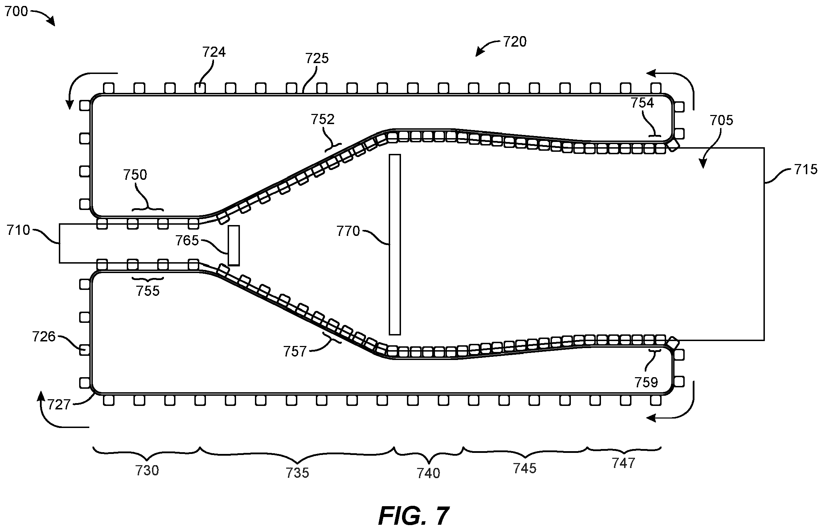

A single stage thin film orientation system for forming an optically anisotropic polymer thin film is shown schematically in FIG. 7. System 700 may include a thin film input zone 730 for receiving and pre-heating a crystallizable portion 710 of a polymer thin film 705, a thin film output zone 747 for outputting a crystallized and oriented portion 715 of the polymer thin film 705, and a clip array 720 extending between the input zone 730 and the output zone 747 that is configured to grip and guide the polymer thin film 705 through the system 700, i.e., from the input zone 730 to the output zone 747. Clip array 720 may include a plurality of movable first clips 724 that are slidably disposed on a first track 725 and a plurality of movable second clips 726 that are slidably disposed on a second track 727.

Polymer thin film 705 may include a single polymer layer or multiple (e.g., alternating) layers of first and second polymers, such as a multilayer ABAB... structure. Alternately, polymer thin film 705 may include a composite architecture having a crystallizable polymer thin film and a high Poisson's ratio polymer thin film directly overlying the crystallizable polymer thin film (not separately shown). In some embodiments, a polymer thin film composite may include a high Poisson's ratio polymer thin film reversibly laminated to, or printed on, a single crystallizable polymer thin film or a multilayer polymer thin film.

During operation, proximate to input zone 730, clips 724, 726 may be affixed to respective edge portions of polymer thin film 705, where adjacent clips located on a given track 725, 727 may be disposed at an inter-clip spacing 750, 755. For simplicity, in the illustrated view, the inter-clip spacing 750 along the first track 725 within input zone 730 may be equivalent or substantially equivalent to the inter-clip spacing 755 along the second track 727 within input zone 730. As will be appreciated, in alternate embodiments, within input zone 730, the inter-clip spacing 750 along the first track 725 may be different than the inter-clip spacing 755 along the second track 727.

In addition to input zone 730 and output zone 747, system 700 may include one or more additional zones 735, 740, 745, etc., where each of: (i) the translation rate of the polymer thin film 705, (ii) the shape of first and second tracks 725, 727, (iii) the spacing between first and second tracks 725, 727, (iv) the inter-clip spacing 750, 752, 754, 755, 757, 759, and (v) the local temperature of the polymer thin film 705, etc. may be independently controlled.

In an example process, as it is guided through system 700 by clips 724, 726, polymer thin film 705 may be heated to a selected temperature within each of zones 730, 735, 740, 745, 747. Fewer or a greater number of thermally controlled zones may be used. As illustrated, within zone 735, first and second tracks 725, 727 may diverge along a transverse direction such that polymer thin film 705 may be stretched in the transverse direction while being heated, for example, to a temperature greater than its glass transition temperature (Tg) but less than the onset of melting.

Referring still to FIG. 7, within zone 735 the spacing 752 between adjacent first clips 724 on first track 725 and the spacing 757 between adjacent second clips 726 on second track 727 may decrease relative to the inter-clip spacing 750, 755 within input zone 730. In certain embodiments, the decrease in clip spacing 752, 757 from the initial spacing 750, 755 may scale approximately as the square root of the transverse stretch ratio. The actual ratio may depend on the Poisson's ratio of the polymer thin film as well as the requirements for the stretched thin film, including flatness, thickness, etc. Accordingly, in some embodiments, the in-plane axis of the polymer thin films that is perpendicular to the stretch direction may relax by an amount equal to the square root of the stretch ratio in the stretch direction. By decreasing the clip spacings 752, 757 relative to inter-clip spacing 750, 755 the polymer thin film may be allowed to relax along the machine direction while being stretched along the transverse direction.

A temperature of the polymer thin film may be controlled within each heating zone. Withing stretching zone 735, for example, a temperature of the polymer thin film 705 may be constant or independently controlled within sub-zones 765, 770, for example. In some embodiments, the temperature of the polymer thin film 705 may be decreased as the stretched polymer thin film 705 enters zone 740. Rapidly decreasing the temperature (i.e., thermal quenching) following the act of stretching within zone 735 may enhance the conformability of the polymer thin film 705. In some embodiments, the polymer thin film 705 may be thermally stabilized, where the temperature of the polymer thin film 705 may be controlled within each of the post-stretch zones 740, 745, 747. A temperature of the polymer thin film may be controlled by forced thermal convection or by radiation, for example, IR radiation, or a combination thereof.

Downstream of stretching zone 735, according to some embodiments, a transverse distance between first track 725 and second track 727 may remain constant or, as illustrated, initially decrease (e.g., within zone 740 and zone 745) prior to assuming a constant separation distance (e.g., within output zone 747). In a related vein, the inter-clip spacing downstream of stretching zone 735 may increase or decrease relative to inter-clip spacing 752 along first track 725 and inter-clip spacing 757 along second track 727. For example, inter-clip spacing 755 along first track 725 within output zone 747 may be less than inter-clip spacing 752 within stretching zone 735, and inter-clip spacing 759 along second track 727 within output zone 747 may be less than inter-clip spacing 757 within stretching zone 735. According to some embodiments, the spacing between the clips may be controlled by modifying the local velocity of the clips on a linear stepper motor line, or by using an attachment and variable clip spacing mechanism connecting the clips to the corresponding track.

To facilitate cross-stretch relaxation while stretching in the TD direction, the inter-clip spacings 752, 757 withing stretching zone 735 may be decreased by at least approximately 20% (e.g., 20%, 30%, 40%, or 50% or more) relative to respective inter-clip spacings 750, 755 within input zone 730. The relaxation profile may be constant or variable, i.e., as a function of position, across stretching zone 735. According to some embodiments, a maximum TD draw ratio within stretching zone 735 be at least approximately 2 and less than approximately 4. The stretched and oriented polymer thin film 715 may be removed from system 700 and stretched in a further stretching step, such as via length orientation with relaxation as shown in FIG. 5.

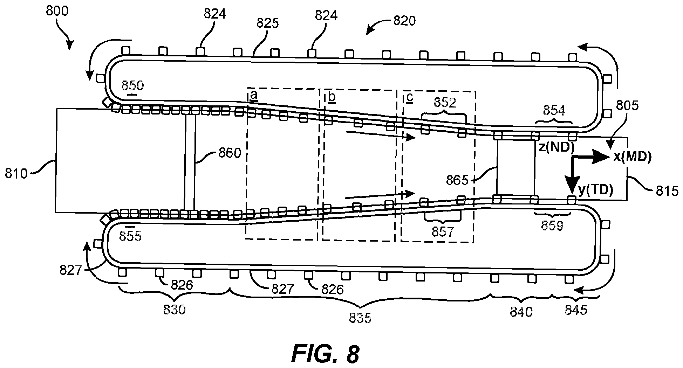

Referringto FIG. 8, shown is a further example system for forming an anisotropic polymer thin film. Thin film orientation system 800 may include a thin film input zone 830 for receiving and pre-heating a crystalline or crystallizable portion 810 of a polymer thin film 805, a thin film output zone 845 for outputting an at least partially crystallized and oriented portion 815 of the polymer thin film 805, and a clip array 820 extending between the input zone 830 and the output zone 845 that is configured to grip and guide the polymer thin film 805 through the system 800. As in the previous embodiment, clip array 820 may include a plurality of first clips 824 that are slidably disposed on a first track 825 and a plurality of second clips 826 that are slidably disposed on a second track 827. In certain embodiments, crystalline or crystallizable portion 810 may correspond to stretched and oriented polymer thin film 615.

In an example process, proximate to input zone 830, first and second clips 824, 826 may be affixed to edge portions of polymer thin film 805, where adjacent clips located on a given track 825, 827 may be disposed at an initial inter-clip spacing 850, 855, which may be substantially constant or variable along both tracks within input zone 830. Within input zone 830 a distance along the transverse direction between first track 825 and second track 827 may be constant or substantially constant.

System 800 may additionally include one or more zones 835, 840, etc. The dynamics of system 800 allow independent control over: (i) the translation rate of the polymer thin film 805, (ii) the shape of first and second tracks 825, 827, (iii) the spacing between first and second tracks 825, 827 along the transverse direction, (iv) the inter-clip spacing 850, 855 within input zone 830 as well as downstream of the input zone (e.g., inter-clip spacings 852, 854, 857, 859), and (v) the local temperature of the polymer thin film, etc.

In an example process, as it is guided through system 800 by clips 824, 826, polymer thin film 805 may be heated to a selected temperature within each of zones 830, 835, 840, 845. A temperature greater than the glass transition temperature of a component of the polymer thin film 805 may be used during deformation (i.e., within zone 835), whereas a lesser temperature, an equivalent temperature, or a greater temperature may be used within each of one or more downstream zones.

As in the previous embodiment, the temperature of the polymer thin film 805 within stretching zone 835 may be locally controlled. According to some embodiments, the temperature of the polymer thin film 805 may be maintained at a constant or substantially constant value during the act of stretching. According to further embodiments, the temperature of the polymer thin film 805 may be incrementally increased within stretching zone 835. That is, the temperature of the polymer thin film 805 may be increased within stretching zone 835 as it advances along the machine direction. By way of example, the temperature of the polymer thin film 805 within stretching zone 835 may be locally controlled within each of heating zones a, b, and c.

The temperature profile may be continuous, discontinuous, or combinations thereof. As illustrated in FIG. 8, heating zones a, b, and c may extend across the width of the polymer thin film 805, and the temperature within each zone may be independently controlled according to the relationship T_{g} < Tₐ < T_{b} < T_{c} < Tₘ. A temperature difference between neighboring heating zones may be less than approximately 20°C, e.g., less than approximately 10°C, or less than approximately 5°C.

Referring still to FIG. 8, within zone 835 the spacing 852 between adjacent first clips 824 on first track 825 and the spacing 857 between adjacent second clips 826 on second track 827 may increase relative to respective inter-clip spacings 850, 855 within input zone 830, which may apply an in-plane tensile stress to the polymer thin film 805 and stretch the polymer thin film along the machine direction. Moreover, the extent of inter-clip spacing on one or both tracks 825, 827 within deformation zone 835 may be constant or variable and, for example, increase as a function of position along the machine direction.

Within stretching zone 835, the inner-clip spacings 852, 857 may increase linearly such that the primary mode of deformation may be at constant velocity. For example, a strain rate of the polymer thin film may decrease along the machine direction. In further embodiments, the polymer thin film 805 may be stretched at a constant strain-rate where the inter-clip spacing may increase exponentially.

In certain examples, a progressively decreasing strain rate may be implemented with thin film orientation system 800 to generate a high refractive index polymer thin film. For instance, within stretching zone 835 an inter-clip spacing may be configured such that a distance between each successive pair of clips 824, 826 increases along the machine direction. The inter-clip spacing between each successive pair of clips may be independently controlled to achieve a desired strain rate along the machine direction.

In response to the tensile stress applied along the machine direction, system 800 is configured to inhibit the generation of stresses and an attendant realignment of crystals along the machine direction. As illustrated, within zone 835, first and second tracks 825, 827 may converge along a transverse direction such that polymer thin film 805 may relax in the transverse direction while being stretched in the machine direction. Using a single stretching step or multiple stretching steps, polymer thin film 805 may be stretched by a factor of at least approximately 4 (e.g., 4, 5, 6, 7, 8, 9, 10, 20, 40, 100, or more, including ranges between any of the foregoing values).

Within stretching zone 835, an angle of inclination of first and second tracks 825, 827 (i.e., with respect to the machine direction) may be constant or variable. In particular examples, the inclination angle within stretching zone 835 may decrease along the machine direction. That is, according to certain embodiments, the inclination angle within heating zone a may be greater than the inclination angle within heating zone b, and the inclination angle within heating zone b may be greater than the inclination angle within heating zone c. Such a configuration may be used to provide a progressive decrease in the relaxation rate (along the transverse direction) within the stretching zone 835 as the polymer thin film advances through system 800.

In some embodiments, the temperature of the polymer thin film 805 may be decreased as the stretched polymer thin film 805 exits zone 835. In some embodiments, the polymer thin film 805 may be thermally stabilized, where the temperature of the polymer thin film 805 may be controlled within each of the post-deformation zones 840, 845. A temperature of the polymer thin film may be controlled by forced thermal convection or by radiation, for example, IR radiation, or a combination thereof.

Downstream of deformation zone 835, the inter-clip spacing may increase or remain substantially constant relative to inter-clip spacing 852 along first track 825 and inter-clip spacing 857 along second track 827. For example, inter-clip spacing 855 along first track 825 within output zone 845 may be substantially equal to the inter-clip spacing 852 as the clips exit zone 835, and inter-clip spacing 859 along second track 827 within output zone 845 may be substantially equal to the inter-clip spacing 857 as the clips exit zone 835. Following the act of stretching, polymer thin film 805 may be annealed, for example, within one or more downstream zones 840, 845.

The strain impact of the thin film orientation system 800 is shown schematically by unit segments 860, 865, which respectively illustrate pre- and post-deformation dimensions for a selected area of polymer thin film 805. In the illustrated embodiment, polymer thin film 805 has a pre-stretch width (e.g., along the transverse direction) and a pre-stretch length (e.g., along the machine direction). As will be appreciated, a post-stretch width may be less than the pre-stretch width and a post-stretch length may be greater than the pre-stretch length.

In some embodiments, a roll-to-roll system may be integrated with a thin film orientation system, such as thin film orientation system 600 or thin film orientation system 800, to manipulate a polymer thin film. In further embodiments, as illustrated herein with reference FIG. 8, a roll-to-roll system may itself be configured as a thin film orientation system.

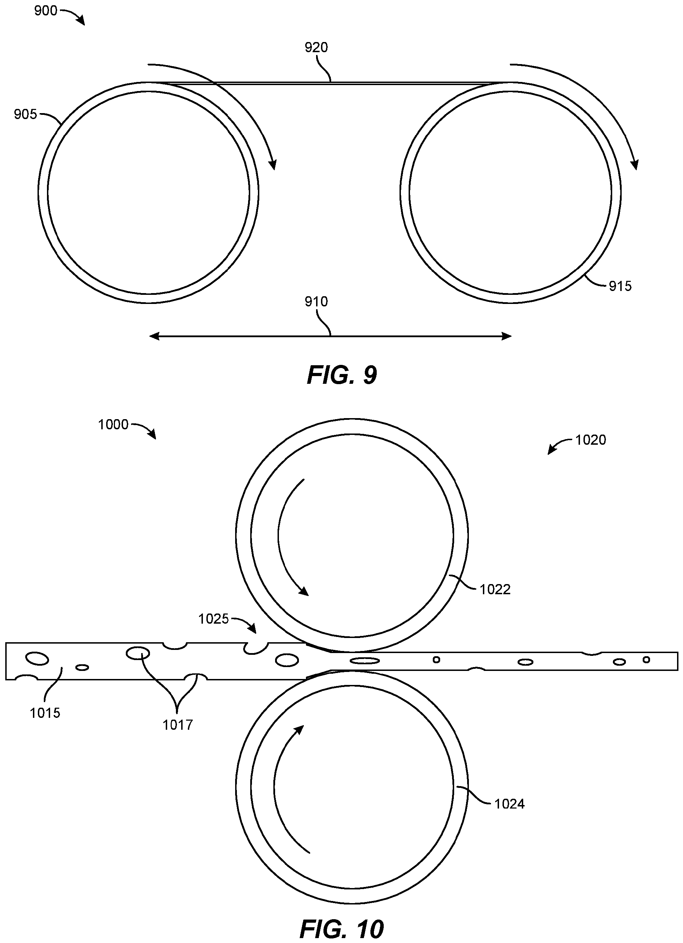

An example roll-to-roll polymer thin film orientation system is depicted in FIG. 9. In conjunction with system 900, a method for stretching a polymer thin film 920 may include mounting the polymer thin film between linear rollers 905, 915 and heating a portion of the polymer thin film located between the rollers 905, 915 to a temperature greater than its glass transition temperature. Rollers 905, 915 may be arranged with a controllable spacing 910 therebetween. A heat source (not shown), such as an IR source optionally equipped with an IR reflector, may be used to heat the polymer thin film 920 within a deformation region between the rollers.

While controlling the temperature of the polymer thin film, rollers 905, 915 may be engaged and the polymer thin film may be stretched. For instance, first roller 905 may rotate at a first rate and second roller 915 may rotate at a second rate greater than the first rate to stretch the polymer thin film along a machine direction therebetween. Within a deformation zone between rollers, system 900 may be configured to locally control the temperature and the strain rate of the polymer thin film. In some examples, as the polymer thin film advances from roller 905 to roller 915, a temperature of the polymer thin film may increase, and a strain rate of the polymer thin film may decrease. Downstream of roller 915, the polymer thin film may then be cooled while maintaining the applied stress. System 900 may be used to form a uniaxially oriented polymer thin film. Additional rollers may be added to system 900 to control the conveyance and take-up of the polymer thin film.

Referring to FIG. 10, shown schematically is a calendering method for manufacturing an anisotropic polymer thin film. In method 1000, a stretched UHMWPE thin film 1015, such as oriented polymer thin film 715 or oriented polymer thin film 815, may be fed into a calendering system 1020. Calendering system 1020 may include a pair of counter-rotating rollers 1022, 1024 defining a nip region 1025. As the thin film 1015 passes into the nip region 1025 and between the rollers 1022, 1024, the thin film 1015 may be compressed. In exemplary embodiments, rollers 1022, 1024 may be heated. In some examples, the temperature of the rollers during calendering may be greater than the glass transition temperature of the polymer. In some examples, the temperature of the rollers during calendering may be less than, equal to, or greater than the melting onset temperature of the polymer.

During calendering, voids 1017 present in stretched UHMWPE thin film 1015 may be compressed, and the overall void fraction within the thin film may be decreased. Moreover, voids exposed at a surface of the thin film may be smoothed, resulting in decreased surface roughness and, together with compression of voids within the bulk of the thin film, higher transmissivity and higher thermal conductivity.

Whereas the total crystallinity and the degree of crystalline alignment may be limited by conventional processing, e.g., due to chain entanglement, Applicants have shown that a gel casting method, optionally in conjunction with the addition of a low molecular weight additive to a thin film composition, may decrease chain entanglement of the high molecular weight component.

An ultrahigh molecular weight polyethylene (PE) thin film may be characterized by a high elastic modulus (>25 GPa), high tensile strength (>0.8 GPa), and high thermal conductivity (>5 W/mK), and may be formed via gel casting from a composition that includes a crystallizable polymer and an optional low molecular weight additive. An example method may include forming a solution of a crystallizable polymer and a solvent, removing a portion of the solvent to form a polymer gel thin film, and then orienting the thin film.

The crystallizable polymer may have a molecular weight of at least approximately 250,000 g/mol. The molecular weight distribution may be mono-disperse, bi-modal, or poly-disperse. The choice of solvent may facilitate chain disentanglement and accordingly polymer chain alignment during orienting to high stretch ratios (e.g., greater than 10:1). The additive, if used, may include a low molecular weight polymer or oligomer, although further additives may include lubricants, antioxidants, index-matching additives, and the like. Prior to stretching, a calendering process may be used to orient polymer chains. The application of a uniaxial or biaxial stress to a single or multilayer thin film may be used to align polymer chains and/or orient crystals to induce optical and mechanical anisotropy.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 1100 in FIG. 11) or that visually immerses a user in an artificial reality (such as, e.g., virtual-reality system 1200 in FIG. 12). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 11, augmented-reality system 1100 may include an eyewear device 1102 with a frame 1110 configured to hold a left display device 1115(A) and a right display device 1115(B) in front of a user's eyes. Display devices 1115(A) and 1115(B) may act together or independently to present an image or series of images to a user. While augmented-reality system 1100 includes two displays, embodiments of this disclosure may be implemented in augmented-reality systems with a single NED or more than two NEDs.

In some embodiments, augmented-reality system 1100 may include one or more sensors, such as sensor 1140. Sensor 1140 may generate measurement signals in response to motion of augmented-reality system 1100 and may be located on substantially any portion of frame 1110. Sensor 1140 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1100 may or may not include sensor 1140 or may include more than one sensor. In embodiments in which sensor 1140 includes an IMU, the IMU may generate calibration data based on measurement signals from sensor 1140. Examples of sensor 1140 may include, without limitation, accelerometers, gyroscopes, magnetometers, other suitable types of sensors that detect motion, sensors used for error correction of the IMU, or some combination thereof.

In some examples, augmented-reality system 1100 may also include a microphone array with a plurality of acoustic transducers 1120(A)-1120(J), referred to collectively as acoustic transducers 1120. Acoustic transducers 1120 may represent transducers that detect air pressure variations induced by sound waves. Each acoustic transducer 1120 may be configured to detect sound and convert the detected sound into an electronic format (e.g., an analog or digital format). The microphone array in FIG. 11 may include, for example, ten acoustic transducers: 1120(A) and 1120(B), which may be designed to be placed inside a corresponding ear of the user, acoustic transducers 1120(C), 1120(D), 1120(E), 1120(F), 1120(G), and 1120(H), which may be positioned at various locations on frame 1110, and/or acoustic transducers 1120(I) and 1120(J), which may be positioned on a corresponding neckband 1105.

In some embodiments, one or more of acoustic transducers 1120(A)-(J) may be used as output transducers (e.g., speakers). For example, acoustic transducers 1120(A) and/or 1120(B) may be earbuds or any other suitable type of headphone or speaker.

The configuration of acoustic transducers 1120 of the microphone array may vary. While augmented-reality system 1100 is shown in FIG. 11 as having ten acoustic transducers 1120, the number of acoustic transducers 1120 may be greater or less than ten. In some embodiments, using higher numbers of acoustic transducers 1120 may increase the amount of audio information collected and/or the sensitivity and accuracy of the audio information. In contrast, using a lower number of acoustic transducers 1120 may decrease the computing power required by an associated controller 1150 to process the collected audio information. In addition, the position of each acoustic transducer 1120 of the microphone array may vary. For example, the position of an acoustic transducer 1120 may include a defined position on the user, a defined coordinate on frame 1110, an orientation associated with each acoustic transducer 1120, or some combination thereof.

Acoustic transducers 1120(A) and 1120(B) may be positioned on different parts of the user's ear, such as behind the pinna, behind the tragus, and/or within the auricle or fossa. Or, there may be additional acoustic transducers 1120 on or surrounding the ear in addition to acoustic transducers 1120 inside the ear canal. Having an acoustic transducer 1120 positioned next to an ear canal of a user may enable the microphone array to collect information on how sounds arrive at the ear canal. By positioning at least two of acoustic transducers 1120 on either side of a user's head (e.g., as binaural microphones), augmented-reality system 1100 may simulate binaural hearing and capture a 3D stereo sound field around about a user's head. In some embodiments, acoustic transducers 1120(A) and 1120(B) may be connected to augmented-reality system 1100 via a wired connection 1130, and in other embodiments acoustic transducers 1120(A) and 1120(B) may be connected to augmented-reality system 1100 via a wireless connection (e.g., a BLUETOOTH connection). In still other embodiments, acoustic transducers 1120(A) and 1120(B) may not be used at all in conjunction with augmented-reality system 1100.

Acoustic transducers 1120 on frame 1110 may be positioned in a variety of different ways, including along the length of the temples, across the bridge, above or below display devices 1115(A) and 1115(B), or some combination thereof. Acoustic transducers 1120 may also be oriented such that the microphone array is able to detect sounds in a wide range of directions surrounding the user wearing the augmented-reality system 1100. In some embodiments, an optimization process may be performed during manufacturing of augmented-reality system 1100 to determine relative positioning of each acoustic transducer 1120 in the microphone array.

In some examples, augmented-reality system 1100 may include or be connected to an external device (e.g., a paired device), such as neckband 1105. Neckband 1105 generally represents any type or form of paired device. Thus, the following discussion of neckband 1105 may also apply to various other paired devices, such as charging cases, smart watches, smart phones, wrist bands, other wearable devices, hand-held controllers, tablet computers, laptop computers, other external compute devices, etc.

As shown, neckband 1105 may be coupled to eyewear device 1102 via one or more connectors. The connectors may be wired or wireless and may include electrical and/or non-electrical (e.g., structural) components. In some cases, eyewear device 1102 and neckband 1105 may operate independently without any wired or wireless connection between them. While FIG. 11 illustrates the components of eyewear device 1102 and neckband 1105 in example locations on eyewear device 1102 and neckband 1105, the components may be located elsewhere and/or distributed differently on eyewear device 1102 and/or neckband 1105. In some embodiments, the components of eyewear device 1102 and neckband 1105 may be located on one or more additional peripheral devices paired with eyewear device 1102, neckband 1105, or some combination thereof.

Pairing external devices, such as neckband 1105, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1100 may be provided by a paired device or shared between a paired device and an eyewear device, thus reducing the weight, heat profile, and form factor of the eyewear device overall while still retaining desired functionality. For example, neckband 1105 may allow components that would otherwise be included on an eyewear device to be included in neckband 1105 since users may tolerate a heavier weight load on their shoulders than they would tolerate on their heads. Neckband 1105 may also have a larger surface area over which to diffuse and disperse heat to the ambient environment. Thus, neckband 1105 may allow for greater battery and computation capacity than might otherwise have been possible on a stand-alone eyewear device. Since weight carried in neckband 1105 may be less invasive to a user than weight carried in eyewear device 1102, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1105 may be communicatively coupled with eyewear device 1102 and/or to other devices. These other devices may provide certain functions (e.g., tracking, localizing, depth mapping, processing, storage, etc.) to augmented-reality system 1100. In the embodiment of FIG. 11, neckband 1105 may include two acoustic transducers (e.g., 1120(I) and 1120(J)) that are part of the microphone array (or potentially form their own microphone subarray). Neckband 1105 may also include a controller 1125 and a power source 1135.

Acoustic transducers 1120(I) and 1120(J) of neckband 1105 may be configured to detect sound and convert the detected sound into an electronic format (analog or digital). In the embodiment of FIG. 11, acoustic transducers 1120(I) and 1120(J) may be positioned on neckband 1105, thereby increasing the distance between the neckband acoustic transducers 1120(I) and 1120(J) and other acoustic transducers 1120 positioned on eyewear device 1102. In some cases, increasing the distance between acoustic transducers 1120 of the microphone array may improve the accuracy of beamforming performed via the microphone array. For example, if a sound is detected by acoustic transducers 1120(C) and 1120(D) and the distance between acoustic transducers 1120(C) and 1120(D) is greater than, e.g., the distance between acoustic transducers 1120(D) and 1120(E), the determined source location of the detected sound may be more accurate than if the sound had been detected by acoustic transducers 1120(D) and 1120(E).

Controller 1125 of neckband 1105 may process information generated by the sensors on neckband 1105 and/or augmented-reality system 1100. For example, controller 1125 may process information from the microphone array that describes sounds detected by the microphone array. For each detected sound, controller 1125 may perform a direction-of-arrival (DOA) estimation to estimate a direction from which the detected sound arrived at the microphone array. As the microphone array detects sounds, controller 1125 may populate an audio data set with the information. In embodiments in which augmented-reality system 1100 includes an inertial measurement unit, controller 1125 may compute all inertial and spatial calculations from the IMU located on eyewear device 1102. A connector may convey information between augmented-reality system 1100 and neckband 1105 and between augmented-reality system 1100 and controller 1125. The information may be in the form of optical data, electrical data, wireless data, or any other transmittable data form. Moving the processing of information generated by augmented-reality system 1100 to neckband 1105 may reduce weight and heat in eyewear device 1102, making it more comfortable to the user.

Power source 1135 in neckband 1105 may provide power to eyewear device 1102 and/or to neckband 1105. Power source 1135 may include, without limitation, lithium ion batteries, lithium-polymer batteries, primary lithium batteries, alkaline batteries, or any other form of power storage. In some cases, power source 1135 may be a wired power source. Including power source 1135 on neckband 1105 instead of on eyewear device 1102 may help better distribute the weight and heat generated by power source 1135.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1200 in FIG. 12, that mostly or completely covers a user's field of view. Virtual-reality system 1200 may include a front rigid body 1202 and a band 1204 shaped to fit around a user's head. Virtual-reality system 1200 may also include output audio transducers 1206(A) and 1206(B). Furthermore, while not shown in FIG. 12, front rigid body 1202 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 1100 and/or virtual-reality system 1200 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 1100 and/or virtual-reality system 1200 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 1100 and/or virtual-reality system 1200 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and may be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a polymer thin film that comprises or includes polyethylene include embodiments where a polymer thin film consists essentially of polyethylene and embodiments where a polymer thin film consists of polyethylene.

## Claims

1. A polymer thin film comprising:
polyethylene having a molecular weight of at least approximately 250,000 g/mol;
an elastic modulus of at least approximately 25 GPa;
a tensile strength of at least approximately 0.8 GPa; and
a thermal conductivity of at least approximately 5 W/mK.

2. The polymer thin film of claim 1, wherein a molecular weight distribution of the polyethylene is selected from the group consisting of monodisperse, bimodal, and polydisperse.

3. The polymer thin film of claim 1 or 2, further comprising an additive having a molecular weight of less than approximately 4000 g/mol.

4. The polymer thin film of claim 3, wherein the additive comprises:
polyethylene or a polyethylene oligomer; and/or
a lubricant or an antioxidant.

5. The polymer thin film of claim 3 or 4, wherein the additive has a thermal conductivity of at least approximately 5 W/mK;

6. The polymer thin film of any of claims 3 to 5, where the additive constitutes from approximately 50 wt.% to approximately 99 wt.% of the polymer thin film.

7. The polymer thin film of any preceding claim, having:
a near field transmissivity of at least approximately 85%; and/or
a far field transmissivity of at least approximately 85%.

8. The polymer thin film of any preceding claim, having an optical transmissivity within the visible spectrum of at least approximately 85%.

9. The polymer thin film of any preceding claim, having bulk haze of less than approximately 10%.

10. A method comprising:
forming a polymer solution comprising a crystallizable polyethylene and a liquid solvent;
forming a gel from the polymer solution;
forming a polymer thin film from the gel by calendering or solid state extrusion; and
stretching the polymer thin film, wherein the stretched polymer thin film comprises:
polyethylene having a molecular weight of at least approximately 250,000 g/mol;
an elastic modulus of at least approximately 25 GPa;
a tensile strength of at least approximately 0.8 GPa; and
a thermal conductivity of at least approximately 5 W/mK.

11. The method of claim 10, wherein forming the gel comprises:
removing at least a portion of the liquid solvent from the polymer solution; and/or
cooling the polymer solution.

12. The method of claim 10 or 11, wherein forming the gel comprises adding a poor solvent to the polymer solution.

13. The method of any of claims 10 to 12, wherein stretching the polymer thin film comprises:
applying a uniaxial stress;
applying a biaxial stress; and/or
applying a first tensile stress along a first in-plane direction of the polymer thin film and applying a second tensile stress along a second in-plane direction of the polymer thin film.

14. The method of any of claims 10 to 13, further comprising annealing the polymer thin film.

15. A polymer thin film, comprising:
a crystalline polyethylene polymer having a bi-modal molecular weight distribution, wherein the polymer thin film comprises at least two of (i) an elastic modulus of at least approximately 25 GPa, (ii) a tensile strength of at least approximately 0.8 GPa, and (iii) a thermal conductivity of at least approximately 5 W/mK.
